# EUROPEAN PATENT SPECIFICATION

(11) **EP 2 954 197 B1**
(45) Date of publication and mention of the grant of the patent: **17.08.2016**
(21) Application number: 14710403.8
(22) Date of filing: 10.02.2014
(51) Int. Cl.: F03C 2/08, F04C 2/08, F16H 39/36, F04C 2/10, F01C 1/10, F01C 1/08, F01C 21/00, F04C 14/18, F01C 20/08

(54) **HYDRAULIC GEAR MOTOR, GEAR PUMP AND GEARBOX WITH CONTINUOUSLY VARIABLE PARAMETERS.**
HYDRAULISCHER ZAHNRADMOTOR, ZAHNRADPUMPE UND GETRIEBE MIT STUFENLOS VERSTELLBAREN PARAMETERN.
MOTEUR À ENGRENAGES HYDRAULIQUE, POMPE À ENGRENAGES ET BOÎTE DE VITESSES À PARAMÈTRES VARIABLES EN CONTINU

(30) Priority: 08.02.2013 SK 000232013
(43) Date of publication of application: 16.12.2015
(73) Proprietor: FIGURA, Pavol, 92101 Piestany (SK)
(72) Inventor: FIGURA, Pavol, 92101 Piestany (SK)
(74) Representative: Majlingova, Marta
(86) International application number: PCT/SK2014/050003
(87) International publication number: WO 2014/123490

(56) References cited:
- EP-A1- 2 497 950
- WO-A1-2010/119411
- US-A1- 2001 024 618
- US-A1- 2005 226 757
- US-B1- 6 244 839

## Description

### Technical field

The technical solution relates to a hydraulic gear motor, a gear pump and continuously variable transmissions, automatic continuously variable transmissions operating from zero output speed without coupling or without hydrodynamic converter, be it with variable torque in its entire operation, to pumps with continuously variable outlet capacity from zero, to hydraulic motors with continuously variable speed, hydraulic brakes as well as to hydraulic, pneumatic and rotational accumulating systems.

### State of the art

At present there is a large number of transmissions used in transportation, in industries and other sectors of economy.

They can be divided to the following:
Transmissions with constant gear (formed by e.g. two rotors, a pump and a hydraulic motor, lever ones, and the like).

Variable transmissions (e.g. classical manual transmissions in passenger automobiles, cargo vehicles, in bicycles, machine tools and the like)

Partially continuous transmissions (e.g. variation ones, hydrodynamic converter and the like)

Transmissions seemingly operating as continuous from zero rotation (these are primarily automatic transmissions compose from rotors, variators, one or more couplings, hydrodynamic converter and the like).

Absolutely continuous transmissions with a theoretical transmission 1:0 up to 1: infinity with a variable torque. There is only one known functional transmission consisting of a pump with continuously variable output flow rate and of a hydraulic motor with continuously variable rotational speed in accordance with patent application PCT/SK2011/000009 published under no. WO/2011/129776. Under document WO/2011/129776 it consists of relatively axially slidable rotors with rings or segments with flow passages slid on, which divide the rotors to operative and inoperative parts. The said rotors may have outer as well as inner gearing. They can roll upon one another, but fail to generate an orbital movement. The rotors are in contact in one or more (rolling) points, but not in such a number corresponding to a number of teeth of the smallest of them. It contains a sliding sealing housing. The tooth spaces are isolated on their circumferences and liquid does not circulate between them.

Gear pumps or hydraulic motors with different tooth shapes, or pumps and hydraulic motors with rotational pistons are of wide use, in particular in lubrication technology, pressure generating, in hydraulic drive systems, hydraulic transmissions as well as other various hydraulic machines and devices. Some of them are constructed for specific conditions and have constant parameters, some have changeable parameters and some even have continuously variable parameters, be it in operation in static as well as in dynamic modes. Nowadays, pumps are capable of operating with continuously variable flow, hydraulic motors with continuously variable rotational speed and transmissions with absolutely continuous regulation of the rotational speed; be it even from zero output rotational speed without use of a coupling or without a hydrodynamic converter. Transmissions have a very wide range of use and they may be used literally anywhere from bicycles to tanks, including motorcycles, passenger automobiles as well as cargo vehicles and the like.

The state of the art includes also other types of pumps and hydraulic motors with relatively axial sliding of rotors that do not comply with essential operation conditions of such hydraulic equipment, or they have shortages hindering their applicability. They are thus unsuitable for industrial or commercial use, such as "gerotor" type pumps which contain neither rotational nor planar compensation systems, although when adjusting them inner volume changes occur in said pumps, nor they contain synchronising systems of rotors. They are thus incapable of continuous variation of a flow rate of liquids from zero flow rate, they are unable to create a so called zero output flow rate or delivery (hereinafter only output flow rate) tooth surface in continuous manners at an inner volume change and also at closed gaps between teeth. The output flow volume of said pump with continuously variable flow rate is commensurable to the outlet flow surface, to inner volume changes and to volume changes of the closed gaps between teeth.

Document GB 1 539 515 A - A pump is formed by rotors having only outer teeth that are sliding axially against each other. Rings without flow openings are slid on said rotors. Since said rings lacks flow openings liquid is completely closed in majority of the gaps between teeth, because they are mounted and closed in a body of the pump. It is also impossible to move the ring, lacking the flow openings, which is slidably mounted in the sealing plate. An axial movement is provided by hydraulics with counteraction of a spring. Since liquid is incompressible, relative axial movement with these rotors or with moving rings by means of the sealing plate is not yet possible. Until this moment said pump cannot be considered functional and applicable for the function of continuously variable flow rate. The document states that said pump cannot operate with a zero flow rate, which is clear evidence that even if the pump was capable of functioning it would still be the pump with a limited function of a flow rate. The text also describes a possible variation of liquid volumes in the closed gaps between teeth so that it creates e.g. cut-outs on sides of teeth or it secures connection of the remained liquid with outlet flows through suitable ducts in rotors or in rings. That is yet another problem that hinders utility of the pump.

Document DE 101 56 977 A1 - addresses a hydraulic motor with continuously variable speed. In accordance with the drawings said hydraulic gear motor is formed by two rotors that absolutely fail to meet an essential condition - cooperation of rotors - that is absolutely clear and evident from a drawing of a cross-section of the pump and even more from a drawing of the rotor housing. For that reason the rotors will have some untightness at the point of their contact and the leakage will depend upon rotational speed, size of teeth and on a distance of the axes of said rotors and literally said hydraulic motor will operate in a pulse mode, because said teeth will collide together during rotation. The fact disqualifies said hydraulic motor at once from a category of hydraulic motors with continuously variable rotational speed. In that mode said hydraulic motor shall have a minimum lifetime and therefore no exploitability.

If we acknowledge that said rotors are capable of rolling upon one another, then a housing of one rotor containing flow openings will slide into another rotor. Said openings will be overlapped on several places by one component and by that several tooth spaces of the rotor will be completely closed. It is not clear from the drawing how many of them will be closed, but certainly it will be at minimum one. A hydraulic fluid is incompressible and therefore sliding of the rotor housing into the mentioned rotor will not be possible. The second rotor contains a toothed rim that contains a delivery opening. Said toothed rim together with the enclosure wall completely close several (certainly more than one) gaps between teeth on the second rotor and will block variation in the inner part of the hydraulic motor and therefore the hydraulic motor will be unable to change the rotational speed continuously. The hydraulic motor will not be functional and thus unusable.

Document US 2008/0166251 A1 - addresses a pump consisting of two gerotor types rotors, with only one drive shaft, where there is an axially sliding outer rotor and the pump is variable by outlet pressure. The document does not look for a solution of continuously variable flow volume, only of variable flow volume, neither it addresses a zero flow mode, nor any compensations. It can only approximate to the zero flow mode, which is clearly indicated in the document. The pump cannot be reset in a static mode. The pump only has a partial function of a variable flow. In order to have a proper functioning of the resetting system of the pump, a minimum flow volume has to be provided on the outlet of the pump, i.e. its operation is not possible in a zero mode. Said pump does not contain a synchronizing system of rotors, or any other system that would provide synchronic rotational speed of both rotors and a zero flow mode. Also it does not contain any other resetting system that would enable to reset said pump from the zero flow mode. Resetting of said pump is directly dependent upon flow volume and pressure of the pump outlet and for this reason the outlet flow volume also depends upon intake of a liquid agent into the resetting system. The pump is incapable of operating in a precise dosing pump function and it is also for this reason that at outlet the pump operates at the beginning of resetting and the end of the readjustment of the flow mode in jumps that disrupt the continuous flow function. The pump is incapable of working as a hydraulic motor with variable rotational speed, because the inlet pressure exceeds the outlet pressure and readjustment is therefore impossible. The pump is incapable of continuously variable flow, because when readjusting the pump from one flow volume to another a phenomenon occurs where inner volume of the pump is changing. The phenomenon is caused by different areas of inner sealings because of their unequal diameters. The change in volume is not insignificant and the phenomenon is so serious that the pump is not capable of dealing with volume change without compensation or other systems and the pump is dysfunctional for continuously variable flow. Even if the internal volume change (when increasing) on the output part of the pump is so big as the current flow, there will be no flow on the output of the pump and therefore also the variable flow function will be impaired and so will be the resetting itself. I consider the most serious shortcoming to be that in accordance with the embodiment under said document there exists at minimum one tooth space in the pump that is always completely closed at one certain moment. A number of such closed gaps between teeth is one or more, at one moment it depends not only upon a construction of the pump but also upon even or odd number of teeth of the inner rotor. At said moment no readjusting is possible without compensation, because the hydraulic liquid is incompressible. That happens every time in every tooth space which is at a so called maximal volume mode at the moment. In some cases it also occurs in every opposite tooth space.

Document US 4,740,142 - contains two types of pumps:

### 1. Gear pump with outer as well as inner gears.

They are gear pumps containing two rotors with outer teeth and pumps containing one rotor with outer teeth and one rotor with inner teeth, where at axial sliding of the rotors flow of liquid from higher pressure to lower one at the edge of teeth occurs which absolutely eliminate regular operation of such pump. Said pump is capable of operation only at maximum flow rate and only under the condition that both rotors are equally long. The issue has been solved in the mentioned document WO/2011/129776, which is functional.

### 2. Gerotor type gear pump

A gerotor type gear pump under the document is not capable of regular operation and all essentials written in the statement for document US 2008/0166251 A1is valid for the latter document, as well.

A continuous transmission according to the present invention may replace a functional continuous hydraulic transmission under the published document WO/2011/129776, although the latter one has undeniable advantages. In principle, it has a different construction and particular pumps and hydraulic motors are able to co-operate with pumps and hydraulic motors manufactured in accordance with the mentioned document and they can make absolutely continuous transmissions working from a zero outlet rotational speed with variable torque. The continuous transmission as well as its individual components is able to affect production of new types of pumps, hydraulic motors, hydraulic transmissions, automatic continuous transmissions as well as of various regulated hydraulic drives, hydraulic brakes and accumulation systems.

US 2005/226757 A1 discloses a variable capacity pump/motor with continuously variable rotational speed, which has a meshing internal and external gear set disposed between an upper mandrel and a lower mandrel, each including a flange. The inner gear and the upper mandrell move in response to changing pressures in the casing, allowing the motor to vary displacement and the pump to vary its output based on supplied fluid pressure or based on the speed of the prime mover.

EP 2 497 950 A1 discloses a gerotor pump with continuously variable outlet flow volume containing a shaft with the rotation axis X, on which is mounted at least one inner rotor with outer teeth which is insertable into the outer rotor with inner teeth with the rotation axis Y, whereas a number of teeth of the outer rotor with inner teeth is one more that a number of teeth of the inner rotor with outer teeth and containing the input opening and the output opening, wherein the inner rotor with outer teeth and the outer rotor with inner teeth have at least one degree of clearance in the axial direction.

### Subject-matter of invention

The subject matter of the present invention is in the fact that a hydraulic transmission containing at minimum one gear pump with continuously variable flow volume or at minimum one hydraulic gear motor with continuously variable rotational speed, which rotors have at least one degree of clearance in axial direction (in the direction of X-axis or Y-axis) and contain at least one surface compensation system, is created. By coupling a pump outlet with an inlet of a hydraulic motor and of an outlet of the hydraulic motor with the pump inlet under the present invention an absolutely continuous transmission with a theoretical transmission of 1 : 0 up to 1 : infinity is created. In reality, transmission will be 1 : 0 up to 1 : A (based on experience A shall be more than 100). Such transmission can operate as a centralised transmission (in one carcass) or in a decentralised form (a pump is remote from a hydraulic motor and they are coupled by e.g. a hydraulic duct). The transmission may also contain more than two co-operating members. As a matter of course such transmissions can work as continuous automatic transmissions and the like.

The first subject-matter of this invention is a hydraulic gear motor with continuously variable rotational speed consisting of a shaft with an axis of rotation X, on which at least one inner rotor with outer teeth is positioned, which is slidable into at least one outer rotor with inner teeth and with an axis of rotation Y, whereas a number of teeth of the outer rotor with inner teeth is one more than a number of teeth of the inner rotor with outer teeth, and containing a central body, or eventually having side sealings and an inlet and outlet opening is the first subject-matter of the present invention. Its nature is that the inner rotor with outer teeth and the outer rotor with inner teeth have at least one degree of clearance in axial direction and from sides they are provided with the sliding sealing with a inner thread and with the sliding sealing with compensation cylinders of different diameters, whereas the sliding sealing with the inner thread has a diameter corresponding to the inner diameter of the gear apices of the outer rotor with inner teeth and the sliding sealing with the compensation cylinders have a diameter corresponding to an outer diameter of the gear apices of the inner rotor with outer teeth; and it contains at least one surface compensation system for compensation of inner volume changes that arise at relatively axial movement of the rotors.

An output shaft of the hydraulic gear motor with continuously variable rotational speed may have identical or commensurable transmission, but also reverse rotational speed to another output shaft.

According to a preferred embodiment the hydraulic gear motor with continuously variable rotational speed contains a by-pass regulated system, e.g. with an adjusting bolt or another adjustment element.

A gear pump with continuously variable outlet flow volume, containing a shaft with a rotation axis X, on which at least one inner rotor with outer teeth is positioned and which is slidable into an outer rotor with inner teeth and a rotation axis Y, whereas a number of teeth of the outer rotor with inner teeth is one more than a number of teeth of the inner rotor with outer teeth and containing a central body, possibly with a side sealings, and inlet and outlet openings, is the second subject-matter of the present invention. Its nature is that the inner rotor with outer teeth and the outer rotor with inner teeth have at least one degree of clearance in axial direction, from the sides they are provided with a sliding sealing with a inner thread and a sliding sealing with compensation cylinders of different diameters, whereas the sliding sealing with the inner thread has a diameter corresponding to the inner diameter of the gear apices of the outer rotor with the inner teeth and the sliding sealing with the compensation cylinders have a diameter corresponding to the outer diameter of the gear apices of the inner rotor with outer teeth; and whereas it contains at least one surface compensation system and the by-pass regulated system, such as with an adjusting bolt or other adjustment element or a synchronising system of rotors.

A transmission with continuously adjustable output parameters consisting of at minimum one gear pump in accordance with the present invention with continuously variable output flow volume and at minimum one hydraulic motor; or at minimum one hydraulic gear motor with continuously variable rotational speed and at minimum one pump; or at minimum one gear pump with continuously variable output flow volume and at minimum one hydraulic gear motor with continuously variable rotational speed is the third subject-matter of the present invention. An output of the pump or of the gear pump with continuously variable flow volume is connected with the inlet of the hydraulic motor or of the hydraulic gear motor with continuously variable rotational speed and the outlet of the hydraulic motor or the hydraulic gear motor with continuously variable rotational speed are connected with the inlet of the pump or of the gear pump with continuously variable flow volume. Coupling a pump without continuously variable parameters and a hydraulic motor without continuously variable parameters does not fall within the scope of the present invention. The transmission with continuously adjustable output parameters has to contain at least one surface compensation system for compensation of the inner volume changes emerging during relative axial movement or the rotors due to different diameters of the sliding sealing with the inner thread and of the sliding sealing with the compensation cylinders.

Surface compensation systems of the transmission in accordance with the present invention are formed by compensation cylinders arranged in a sliding sealing that are provided with compensation pistons.

In one embodiment a gear pump with continuously variable output flow and/or a hydraulic gear motor with continuously variable rotational speed contain a central body and in another embodiment it contains a central body and side sealings.

In a preferred embodiment a gear pump and/or a hydraulic gear motor according to the present invention are provided with at least a shifting mechanism which consists of a shifting wheel with a drive screw positioned in the shifting thread of the sliding sealing, of a holder fastened on one of the side sealings and of a retaining ring.

In another preferred embodiment a shifting mechanism and/or sliding parts in axial direction are provided with at least one locking mechanism.

The gear pump and/or the hydraulic gear motor according to the present invention may contain at least one rotational compensation system for compensation of volume closed or closed gaps between teeth and it applies only if the rotors rotate around their axes X and Y.

In another preferred embodiment a gear pump and/or a hydraulic gear motor according to the present invention may contain at least one automatic evaluation and control system.

The transmission with continuously adjustable output parameters according to the present invention is suitable for use in a hydraulic, pneumatic or rotational accumulation system.

A rotational compensation system consists of flow ducts from a closed tooth space into a low-pressure or high-pressure part of the pump with continuously variable outlet flow volume and/or the hydraulic motor with continuously variable rotational speed, under the condition that a direct interconnection of the high-pressure and low-pressure parts of the device through these ducts will not occur.

The rotors of the gear pump according to the present invention and/or the hydraulic gear motor according to the present invention and/or transmissions with continuously adjustable output parameters according to the present invention are adapted for rotational movement or orbital movement.

The pump is formed by at minimum two rotors or rotating pistons slid into each other, where at least one rotor will have outer gearing and at least one rotor will have inner gearing. A rotation axis of one and the other rotors are not identical. The rotors in the present invention may have identical or different length. The rotors abut against each other at minimum at so many points (or these points have a minimal distance of their teeth) as there are teeth or gear apices of the inner rotor with the outer gearing. A number of teeth or of gear apices (hereinafter only teeth) of the outer rotor with inner gearing is one more than a number of teeth of the inner rotor with outer gearing.

Said rotors can have 4 (four) types of relative movements as to the axes:
1. Both rotors revolve only around their own axes.
2. The outer rotor does not revolve and the inner one executes orbital movement.
3. The inner rotor does not revolve and the outer one executes orbital movement.
4. The outer rotor and the inner rotor execute limited orbital movements.

Every rotor can operate as a driving rotor as well as a driven rotor. If both rotors are driven (e.g. by liquid), they operate in a hydraulic motor function, that does not apply for a so called zero flow mode, if they contain synchronising system of rotors, because the hydraulic motor does not include a zero flow mode.

Said type of the continuous pump changes a suction and exhaust flow surface of teeth by relative axial sliding of the rotors continuously from zero, whereas the excess liquid present in the pump in the formed non-outlet tooth spaces orbits around from the outlet to the inlet and from the inlet to the outlet. The hydraulic motor has a compression surface on the inlet and a free surface on the outlet. Pumps according to the present invention shall be sealed both in the direction of rotor axes as well as in inlet and outlet part of the pump, because some sealings are moveable also in axial direction, no matter if the rotors will be operating only in rotational movement, in rotational and orbital movements or will be motionless. From sides said rotors are sealed with sealings (some with bearings) therein containing grooves or openings for inlet and outlet of a liquid agent, openings for a shaft of the inner rotor or other accessory openings and grooves (e.g. for orbital motion function, connecting openings and the like). Some sealings move jointly with the moving rotors in axial direction, but at the same time they can also rotate, some also execute orbital movement, some are firmly fixed with some part of the pump or they have some common movements. All sealings may consist of several parts. The parts are connected and secured so that they would not separate under an influence of inner pressures or under other inner or outer forces and in order to avoid leakage of liquid substances. All parts are mounted to the pump body which may also consist of several parts (central body, side body sealings and the like). Some components are firmly fixed with the body, some are attached movably through bearings or through sealing systems. The Input and out opening of the pump, passing of shafts or of other mechanisms, e.g. adjusting or shifting mechanisms (hereinafter only shifting one), are provided through the body. Said rotors and some sealings are relatively axially slidable against one another by means of the shifting mechanism. Their relative maximal axial sliding may be given by the shortest length of one of the rotors. The rotors thus may or may not have an identical length. The shifting mechanism may be formed by any state-of-the-art power mechanisms. It may be, for example, based upon hydraulic, pneumatic, electric, electronic, mechanical principles and the like, or combination thereof. The mechanism may be attached or connected to with any movable part of the pump or of the hydraulic motor with continuously variable parameters, slidable in axial direction so that the relative axial sliding of the rotor is provided, which is obvious for a person skilled in the art.

The rotors according to the present invention do not contain any rings or segments. The input and output pressure in the gaps between teeth is always the same, depending upon which side (inlet or outlet) the tooth gaps are on. (For one moment there is an exception of one tooth space, which is at the moment in the so-called maximal volume mode and is connected neither to the input nor to the output, sometimes of two, where the opposite one, which is in the minimal volume mode, joins in.) The said applies, if the rotors rotate around their own axes. The rotors according to the present invention are not divided to the active and the non-active parts, but in the pump teeth form a so-called sucking surface (on the inlet) and a delivery surface (on the outlet) and in the hydraulic motors the pressure surface (on the inlet) and free surface (on the outlet). The surface on the input and the surface on the output at one device is always the identical; it continuously changes from zero and is commensurable to the flow rate amount, also due to compensation and synchronisation systems. By that transmitted torque changes, as well. At an orbital movement of the rotors the inlet or the outlet is designed separately into each tooth space of the rotor with inner gearing and therefore said separate inlets and outlets operate in both modes and have to be switched in the body to the central inlet or outlet.

The compensation systems can be divided to rotational and surface ones:
The rotational compensation systems relate to all closed gaps between teeth and depend upon their position in the pump on the pump rotational speed and on the immediate flow volume. There is a vacuum zone on the input part of the pump; on the output part there is a pressure zone. Symmetry does not need to be kept, it is a matter of design. The compensation is not requisite for the orbital pumps (hydraulic motors). The rotational compensation system may be formed by e.g. a pump with continuously variable output flow volume according to invention WO/2011/129776 which also contains a zero flow mode, with a connection to the respective closed tooth space through delivery openings or ducts in sealings or in the parts of the pumps and the like. The ducts connected e.g. to the input part of the low pressure of the pump or hydraulic containers with gas cushion or the like can be used for compensation of excess pressure in closed gaps between teeth. Accordingly, various types of hydraulic compensators from the known art may be used. They are connected into the closed gaps between teeth that change their volume with rotational movement.

Surface compensation systems depend upon a difference of surfaces of two sealings on the sides of the rotors, upon the shifting mechanism and upon positioning and setting of the compensated space in the pump (we call them sections). If some section moves along the circumference, the surface compensation shall be also supplemented by a volume change, e.g. by attaching a pump with continuously variable output flow volume and the like. Volume changes of the gaps between teeth along the circumference of the outer rotor do not have the same nature or size, the said results from a difference of cog apices diameters of the rotors as well as from relative position of axes of both rotors. Said compensation applies around the circumference in the sections and they can be divided to e.g. an input section, an output section and every closed tooth space is a separate section. These sections can be, of course, more than three. Not all of them have to be used. There will be so many in the orbital pump (hydraulic motor) as there are the gaps between teeth in the outer rotor. There the surface compensation systems will not depend upon their position on the circumference. The surface compensation systems may be formed by various pumps, cylinder with pistons and the like and they will be capable of adding or taking an appropriate amount of a liquid agent into or away from a respective section of the gaps between teeth connected or placed in e.g. a side sealing and the like. These are facts known from the state of the art and connection of the surface compensation system to the respective sections is obvious and trouble-free for a person skilled in the art.

In the closed gaps between teeth both compensation systems are applied, except orbital pumps (hydraulic motors) and in some cases they can be combined into one. In general it can be said that it is necessary to ensure a compensation of every closed tooth space in order to provide regular operation of a pump with continuously variable flow, because its volume keeps changing during one rotation (except for the zero mode with a zero surface), be it in the case when the tooth space is closed if only by 1 (one) degree before the position of the maximal volume amount of the respective tooth space, or during other position, when the tooth space is closed, because liquid is incompressible. Likewise, we have to compensation every tooth space, even unclosed, which, from any reason, is changing its volume, in order to provide in every flow mode a correct function of the pump with continuously variable flow from zero flow up to maximal constructional flow volume. The outlet volume of the pump with continuously variable flow is commensurable to the outlet surface formed by the rotors and it changes by relative axial sliding of the rotors continuously from zero, whereas the excess liquid occurring in the pump in the created non-outlet gaps between teeth rotate from the outlet to the inlet and from the inlet to the outlet of the same pump with continuously variable flow.

The compensation system can be controlled individually or by a movement mechanism. In less demanding pumps a certain compensation system in not necessary, the volume change is disregarded. In order to increase sealing we can close more gaps between teeth, but we have to add or take a liquid agent from them during readjustment. The compensation system in this case has to contain a sufficient amount of the liquid agent, which depends not only upon volume changes of the readjusted closed spaces, but also upon an overall summary volume of the closed gaps between teeth. Also, some closed gaps between teeth can be connected and the liquid agent can pass through between them. There can be thus more than one compensation systems and they can be separately connected to the individual closed gaps between teeth depending upon being on the high or low pressure side, in the maximal volume mode or some of them being mutually linked on united pressure. Said movement mechanism is partially dependant also upon inner pressure situation in the pump and also upon the mentioned volume change, therefore this fact shall be considered when designing the shifting mechanism. Said condition can be very easily compensated by e.g. output or input pressure with feedback on the shifting mechanism and the like, which is obvious for a person skilled in the art. Therefore, the shifting mechanism can be provided with a locking system, which will provide a stable flow volume or other work mode, which can be set manually or automatically (e.g. zero flow mode). The locking system may be formed by various mechanisms known from the state of the art, such as a brake, latches, pegs or pins, blocking of the shifting mechanism by mechanical or electronic means individually or using a control system and the like and by that making the relative axial movement of rotors in the static and/or the dynamic modes during operation of the locking system impossible. The locking system may be linked with or connected to any part of the pump (hydraulic motor) that is moving along with the axial movement of the rotors, which is self-evident for an expert skilled in the art. By that the locking system can be considered not only supplementary for the movement mechanism, but also a safety feature for the machine or device, which uses the pump, hydraulic motor or the transmission.

A zero mode may be achieved in two ways:
1. A zero mode is achieved by relative axial sliding of the rotors from the maximum flow mode so that the reset length of the shifting mechanism equals to the shortest length of one of the rotors and by that the delivery surface equals to zero. (The outlet flow volume is thus zero, as well.) At this moment synchronic rotation of both rotors shall be provided by a synchronising system. The synchronising system may be formed by any principle known up to date, such as synchronising elements, rotors, chain transmission, leverage, or supporting rotors and the like. Said synchronising system operates at least when both rotors generate zero outlet flow surface. The synchronising system is connected directly to rotors or to other parts that have identical or commensurable relative rotation and provide synchronization of the rotors.
2. A zero flow may be also achieved by providing minimal flow volume (by means of minimal outlet flow surface of the rotors, e.g. 1 mm²⁾ and returning it from the output through a regulated by-pass part back to the input which is regulated by e.g. an adjusting bolt (valve) in a by-pass duct. During operation of the by-pass regulated part the outlet flow volume will depend not only upon output hydraulic resistance, but also upon hydraulic resistance of the by-pass regulated part. After closing of said controlling par the pump will operate without limitation. Said regulated delivery part may have several functions and may also operate as a safety feature used against overload of the pump, as an element of prevention of misuse of the device or of the machine using such pump or as a hydraulic brake regulator for the hydraulic motor and the like.

Said hydraulic motor with the by-pass regulated part is capable of operating also as hydraulic, and even as a continuously regulated hydraulic brake and the excess pressure can be accumulated. Said pressure can be continuously varied and different output pressure can be achieved even at identical brake power, because the free surface of the hydraulic motor can be continuously varied.

An accumulator can be based upon hydraulic, pneumatic, rotational or similar principles. There are many types of hydraulic and pneumatic accumulators.

It can be for example a pressure container with a gas cushion, which is filled with a pressure liquid agent from the output of the hydraulic motor and by that energy in the pressure form is accumulated. A rotational accumulator can be on a principle of a flywheel.

A continuous transmission can cooperate with an automated evaluation and controlling system and thereby making an automatic continuous transmission. That makes decrease of consumption, increase of economy and utility capabilities of machines and equipments possible.

### Brief description of pictures on the drawings

The invention is explained in more details on the pictures, where:
Fig. 1 represents an inner rotor (rotational piston) with outer teeth and Fig. 1a its longitudinal section;
Fig. 2 shows an outer rotor with inner teeth - a cross section and Fig. 2a is its longitudinal section;
Fig. 3 illustrates a sliding sealing with compensation cylinders - a cross section and
Fig. 3a is its longitudinal section
Fig. 4 illustrates a central body (with a sliding bearing) and Fig. 4a a section through a central body along the line D-D
Fig. 5 depicts a sliding sealing with a inner thread and Fig. 5a its longitudinal section;
Fig. 6 depicts a flow adjusting bolt;
Fig. 7 shows a shifting wheel with a drive screw;
Fig. 8 depicts a shifting mechanism holder from two views;
Fig. 9 illustrates an input shaft of a pump, an output shaft of a hydraulic motor, Fig. 9a to 9c show various details of the shaft and Fig. 9d is a cross section of the shaft along the line D-D;
Fig. 10 illustrates a side sealing of a central body and Fig. 10a is its longitudinal section;
Fig. 11 is a side sealing of a central body with input and output opening and minimal flow stop, Fig. 11 a is its longitudinal section A-A and Fig. 11b is a section along the line B-B;
Fig. 12 is a pump with continuously variable outlet flow - cutaway
Fig. 13 represents a pump with continuously variable outlet flow - "dismantled"
Fig. 14, Fig. 14a and Fig. 14b represent a pump in three positions of flow volume (0%, 50%, 100%);
Fig.15 illustrates in partial section one of the embodiments of a transmission with continuously adjustable output parameters;
Fig.16 represents compensation schematic surfaces of a surface compensation system;
Fig.17 represents a division of a surface compensation system into sections in accordance with an example;
Fig. 18 illustrates a compensation piston.

### Exemplary embodiment

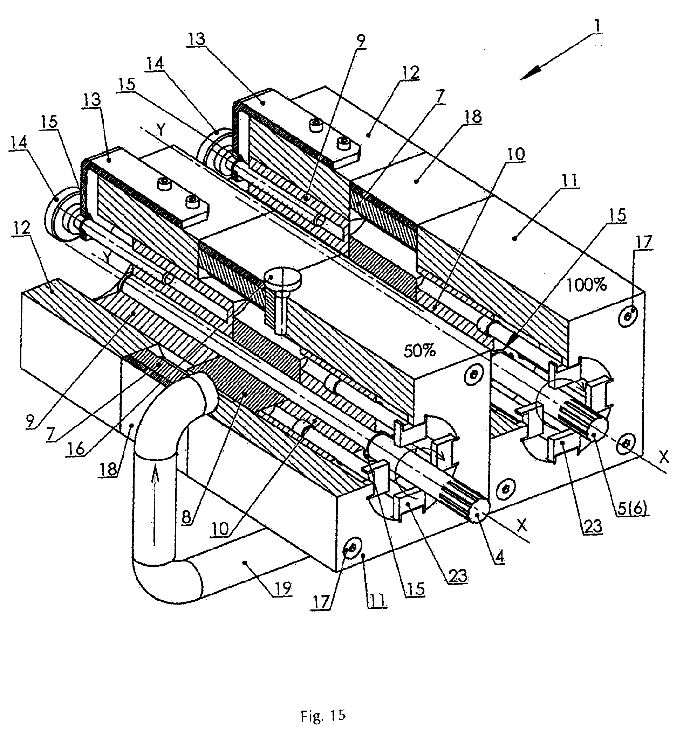

A transmission 1 with continuously adjustable outlet parameters depicted on Fig. 15 consists of a gear pump 2 and a hydraulic gear motor 3, whereas at least one pump 2, or hydraulic motor 3 has continuously adjustable parameters. In this example both equipments the gear pump 2 and the hydraulic gear motor 3 have continuously adjustable parameters. The transmission 1 with continuously adjustable outlet parameters contains an input shaft 4 and one or more output shafts 5, 6 having identical or commensurable continuous adjustment of revolution. The transmission according to the present invention may be constructed as centralised - one piece or as decentralised, where the gear pump 2 is distant from the hydraulic gear motor 3 and a liquid agent flows through a hydraulic duct 19. The pump 2 and the hydraulic motor 3 may be designed identically or differently and they are provided with a shifting mechanism consisting of a holder 13, a shifting wheel 14 and a retaining ring 15. The gear pump 2 with continuously variable flow volume contains at least one surface compensation system. The gear pump 2 with continuously variable flow volume contains the input shaft 4 with an inner rotor 8 with outer teeth slid on, which is inserted into an outer rotor 7 with inner teeth and they are relatively axially slidable along the axes X and Y. The rotor 8 is provided from the sides with a sliding sealing 9 with a inner thread and a sliding sealing 10 with compensation cylinders and they are secured with retaining rings 15. These parts are fitted to a central body 18, to a side sealing 12 and to a side sealing 11 with an inlet opening 21 and an outlet opening 22 connected with a by-pass regulated part. Compensation pistons 23 of the surface compensation system are firmly attached to the side sealing 11.

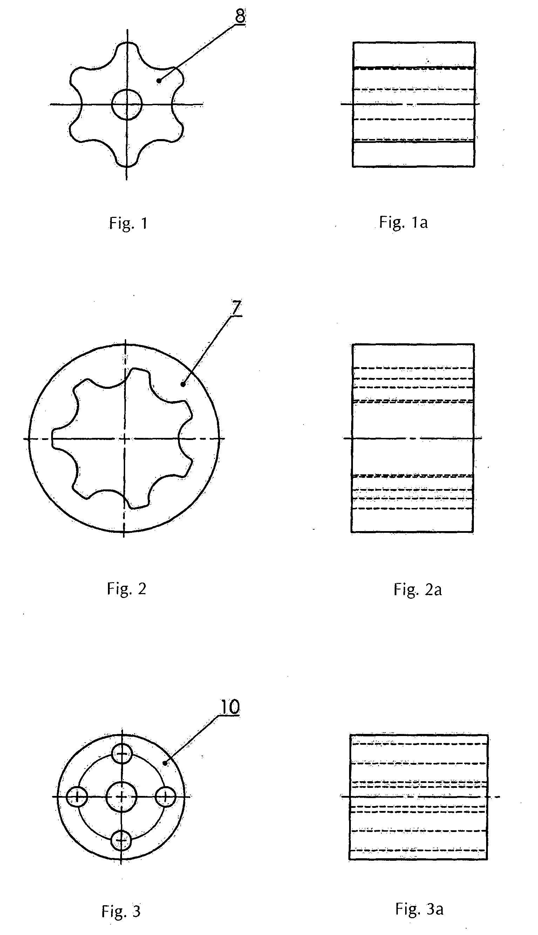

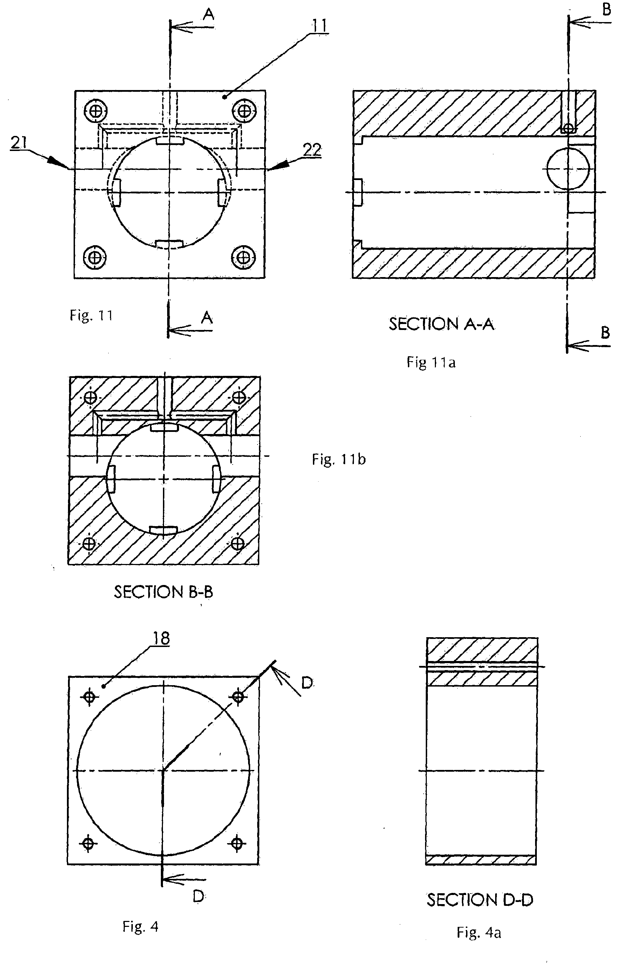

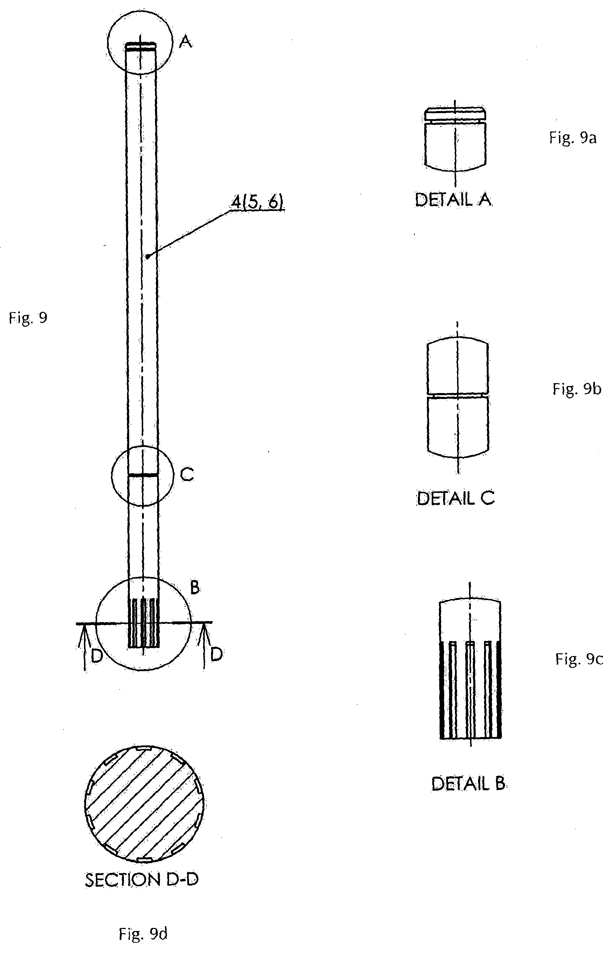

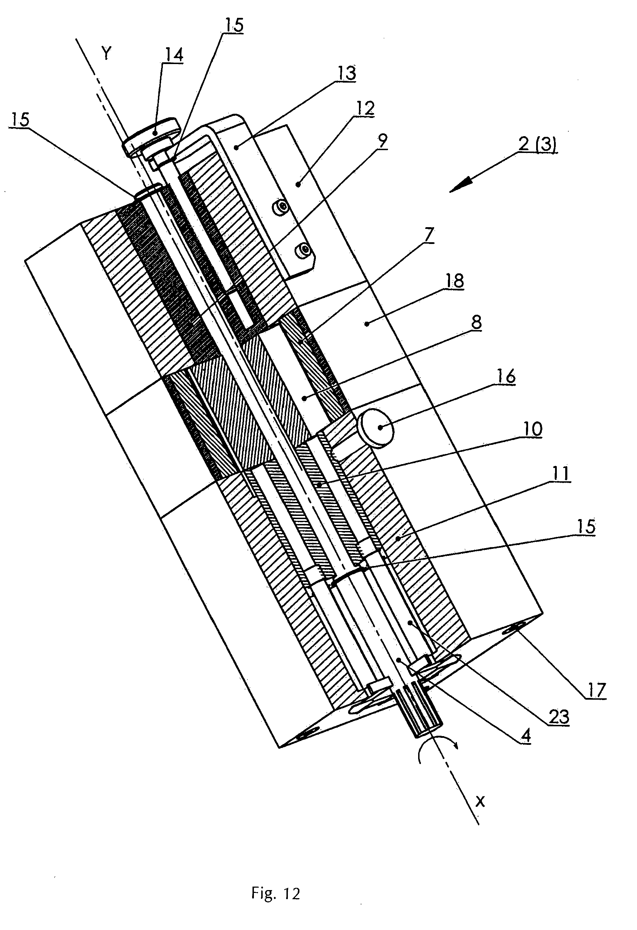

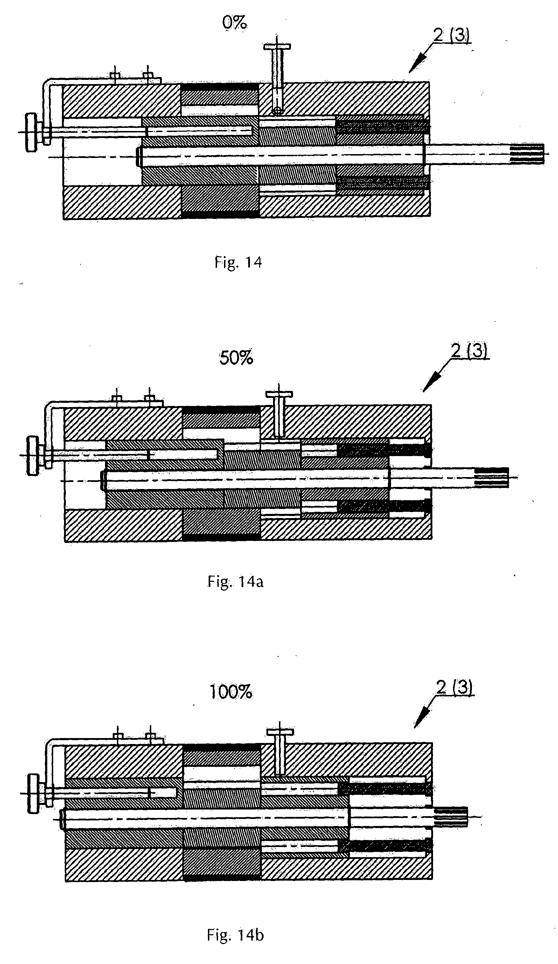

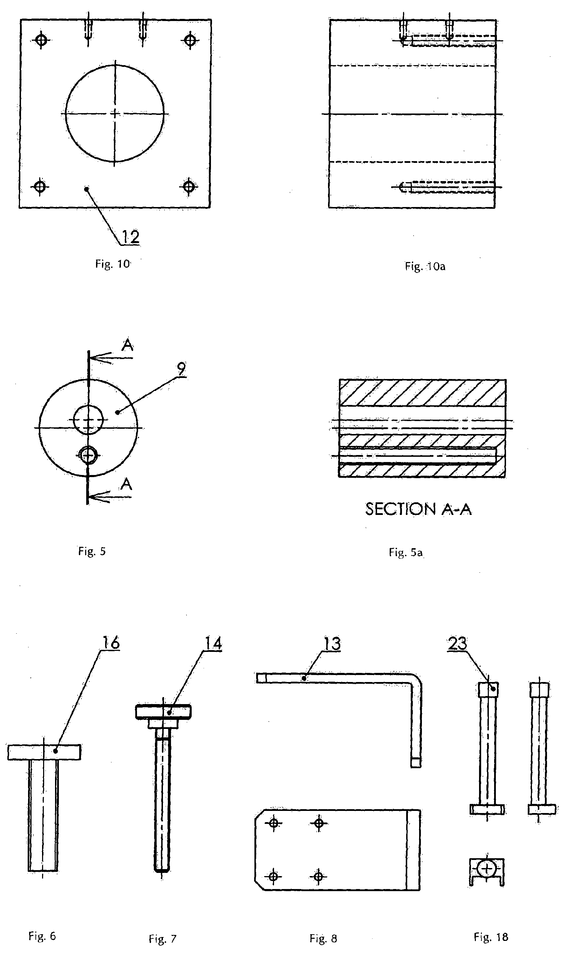

Figures 1 to 18 illustrate different parts of the hydraulic gear motor, hydraulic pump and the transmission with continuously variable parameters as well as individual devices.

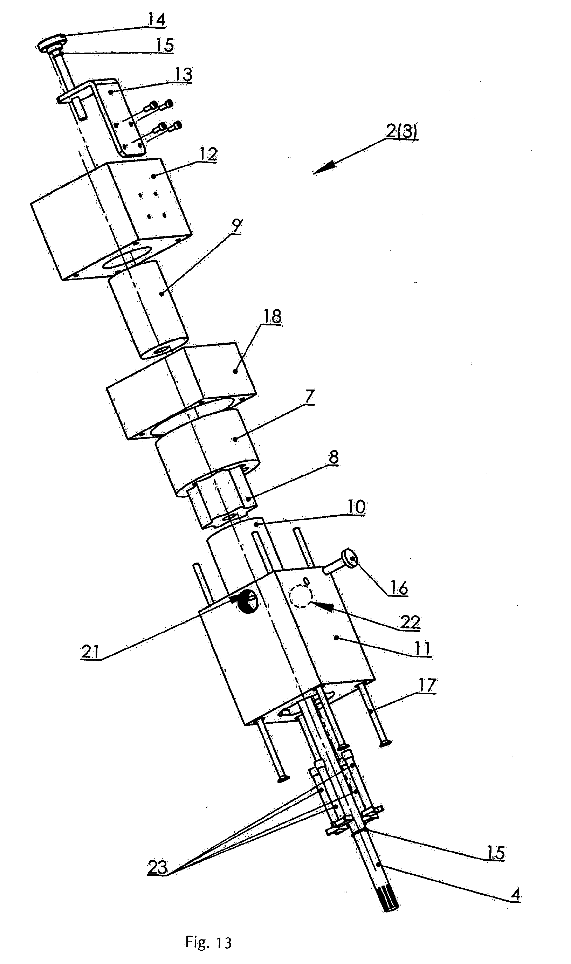

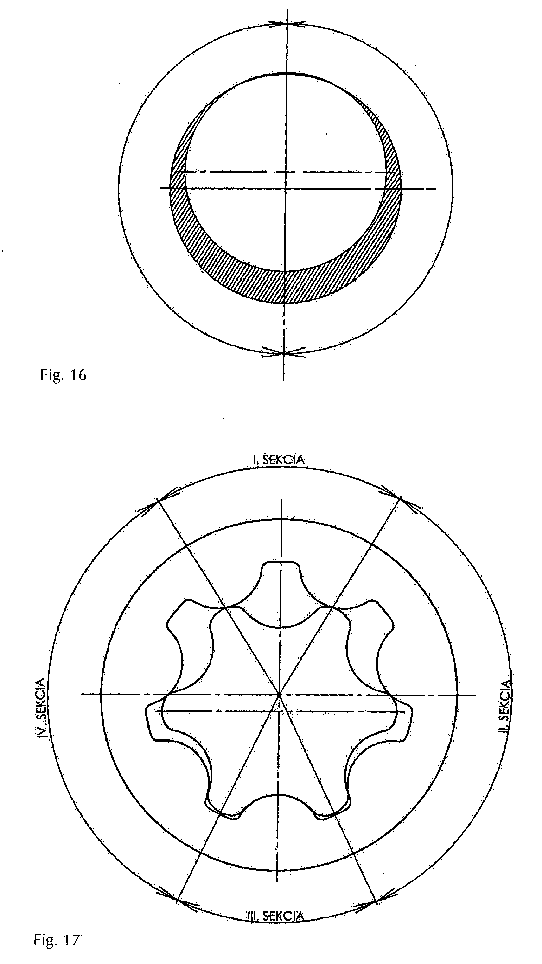

The transmission 1 with continuously variable parameters consists of one pump 2 with continuously variable outlet flow volume made in accordance with the present solution and of one hydraulic motor 3 with continuously variable revolution. The pump 2 with continuously variable outlet flow volume includes also a zero flow mode. It contains a by-pass regulated part with an adjusting bolt 16 of flow volume at minimum outlet flow surface of 1 mm² with four surface compensation systems in four sections (Fig. 16). Fig. 13 illustrates the hydraulic motor 3 with continuously variable revolution, which is identical with the pump 2 with continuously variable flow volume, but it does not contain the by-pass regulated part with the adjusting bolt 16. Fig. 15 illustrates the pump 2 with continuously variable outlet flow volume and the hydraulic motor 3 with continuously variable rotational speed hydraulically connected to the hydraulic duct 19 from the outlet opening 22 of the hydraulic motor 3 with continuously variable rotational speed to the inlet opening 21 of the pump 2 and a hollow bolt (not shown) from the outlet opening 22 of the pump 2 onto the inlet opening 21 of the hydraulic motor 3 with continuously variable revolution. Manufacturing of the pump 2 with continuously variable outlet flow volume. One inner rotor 8 with outer teeth slides on the input shaft 4 and that is slid into one outer rotor 7 with inner teeth. During operation these rotors 7 and 8 revolve around their own axes that are not identical. The outer rotor 7 in this example is not allowed an axial sliding and it will be slidably rotatably mounted in the central body 18. Slidably slid on the shaft 4 with the inner rotor 8 inserted into the outer rotor 7 is the sliding sealing 9 with the shifting thread and the sliding sealing 10 with compensation cylinders so that they slidingly abut against edges of the inner rotor 8 with outer teeth. First sliding sealing 9 with the inner thread and the second shifting sealing 10 with compensation cylinders have different diameters. The second shifting sealing 10 with compensation cylinders has the same diameter as that of the gear apices of the inner rotor 8 and the sliding sealing 9 with the shifting thread has a diameter corresponding to the diameter of the gear apices of the outer rotor 7 with inner teeth. The sliding sealing 9 with the shifting thread and the sliding sealing 10 with compensation cylinders are secured with retaining rings 15. Moving in the sliding sealing 10 with compensation cylinders are compensation pistons 23 which are firmly fixed with the side sealing 11 of the central body with the inlet opening 21 and the outlet opening 22 and a minimal flow stop. The compensation piston in the first section has an inverse operation character to the compensation pistons in the second, third and fourth sections. (If the piston in the first section is sucking, then in the second, third and fourth sections they are delivering and vice verse.) The system is imbedded in the central body 18 in the way so that the outer rotor 7 in the central body 18 is rotating slidingly only around its axis and axial sliding is not allowed. The central body 18 is connected with the side sealing 11 of the central body 18 and with the side sealing 12 of the central body by the bolts 17. On the side sealing 12 of the central body we firmly mount with bolts a holder 13 in which a shifting wheel 14 with the drive screw is pivotedly slid and secured with the retaining ring 15. Created in the side sealing 11 of the central body 18 are the inlet opening 21 and the outlet opening 22, minimal flow stop and the by-pass regulated part that can be adjusted using a flow adjusting bolt 16*.* The sliding sealing 10 with compensation cylinders is moving axially in the side sealing 11 of the central body 18, the sliding sealing 9 with the shifting thread is moving axially in the side sealing 12.

Continuous variation of flow volume in static as well as in dynamic mode is provided manually by means of the shifting wheel 14 with the drive screw.

The above mentioned example of embodiment represents in principle the simplest creation of the continuous transmission 1 as well as of the pump 2 with continuously variable outlet flow volume and serves to understand the nature of the solution. From the above description it is evident that the continuous transmission 1 as well as the pump 2 with continuously variable outlet flow volume may be also created in other embodiments, which will all fall within the scope of the claims. The pump 2 with continuously variable outlet flow volume and the hydraulic motor 3 with continuously variable rotational speed are identical in principle. The cited examples are only illustrative, therefore, they are by no means limiting with respect to the claims. Pumps 2 with continuously variable outlet flow volume and hydraulic motors 3 with continuously variable rotational speed thus create continuous transmissions 1 also using other pumps and hydraulic motors.

### Industrial applicability

A continuous transmission in accordance with the present technical solution enjoys a wide range of use. It is exploitable in transportation, agriculture, forestry, mechanical engineering and the like. The individual components of the continuous transmission can be used separately, e.g. as dosing pumps in healthcare, food industry, chemical industry; broad use is anticipated in cooperation with other hydraulic components. They can replace pumps and hydraulic motors manufactured until now and increase economy of machine and device operation by that. The greatest use of the present invention is envisaged in transportation as the continuous transmission or as the automatic continuous transmission capable of operating from zero without a coupling or without a hydrodynamic converter, be it with continuous variable torque. The usability will range from bicycles, through motorcycles, passenger cars and cargo vehicles, tractors, combine harvesters, ships, airplanes as well as bulldozers, loading machines, excavators, cranes, elevators or in military technology and the like.

## Claims

1. A hydraulic gear motor with continuously variable rotational speed consisting of a shaft (5) with a rotation axis X on which at least one inner rotor (8) with outer teeth is mounted, which is insertable into at least one outer rotor (7) with inner teeth and a rotation axis Y, whereas a number of teeth of the outer rotor (7) with inner teeth is one more than a number of teeth of the inner rotor (8) with outer teeth and comprising an input opening (21) and an output opening (22), and where the inner rotor (8) with outer teeth and the outer rotor (7) with inner teeth have at least one degree of clearance in axial direction **characterised in that** the inner rotor (8) with outer teeth and the outer rotor (7) with inner teeth are from sides provided with a sliding sealing (9) with a inner thread and a sliding sealing (10) with compensation cylinders of uneven diameters, whereas the sliding sealing (9) with the inner thread has a diameter corresponding to the inner diameter of gear apices of the outer rotor (7) with inner teeth and the sliding sealing (10) with compensation cylinders has a diameter corresponding to the outer diameter of the gear apices of the inner rotor (8) with outer teeth; while it contains at least one surface compensation system for compensation of inner volume changes that will arise at relative axial movement of rotors (7) and (8) due to uneven diameters of the sliding sealings (9) and (10).

2. A hydraulic gear motor with continuously variable rotational speed according to claim 1, **characterised in that** it contains an output shaft (6), which has identical or commensurable revolution as the shaft (5).

3. A hydraulic gear motor with continuously variable rotational speed according to claim 1 or 2, **characterised in that** it contains a by-pass regulated system.

4. A hydraulic gear motor with continuously variable rotational speed according to claims 1 to 3, **characterised in that** slid on the outer rotor (7) is the central body (18); or the central body (18) and the side sealing (11) and the side sealing (12) arranged from sides.

5. A hydraulic gear motor with continuously variable rotational speed according to claims 1 to 4, **characterised in that** it is provided with at least one shifting mechanism.

6. A hydraulic gear motor with continuously variable rotational speed according to claims 1 to 5, **characterised in that** the shifting mechanism and/or the moveable parts in the axial direction are provided with at least one locking mechanism.

7. A hydraulic gear motor with continuously variable rotational speed according to claims 1 to 6, **characterised in that** it contains at least one rotational compensation system for compensation of closed volume or of the closed gaps between teeth and it applies only if the rotors (7) and (8) rotate around their axes X and Y.

8. A hydraulic gear motor with continuously variable rotational speed according to claims 3 to 7, for use in accumulation system.

9. A gear pump with continuously variable outlet flow volume containing a shaft (4) with the rotation axis X, on which is mounted at least one inner rotor (8) with outer teeth, which is insertable into the outer rotor (7) with inner teeth with the rotation axis Y, whereas a number of teeth of the outer rotor (7) with inner teeth is one more than a number of teeth of the inner rotor (8) with outer teeth and containing the input opening (21) and the output opening (22), and where the inner rotor (8) with outer teeth and the outer rotor (7) with inner teeth have at least one degree of clearance in the axial direction, **characterised in that** the inner rotor (8) with outer teeth and the outer rotor (7) with inner teeth are from sides provided with the sliding sealing (9) with the inner thread and the sliding sealing (10) with compensation cylinders, of uneven diameters, whereas the sliding sealing (9) with the inner thread has a diameter corresponding to the inner diameter of the gear apices of the outer rotor (7) with inner teeth and the sliding sealing (10) with compensation cylinders has a diameter corresponding to the outer diameter of gear apices of the inner rotor (8) with outer teeth; and whereas it contains at least one surface compensation system, for compensation of inner volume changes that emerge at relative axial movement of the rotors (7) and (8) due to uneven diameters of the sliding sealings (9) and (10), and a by-pass regulated system or a synchronising system of the rotors (7) and (8).

10. A gear pump with continuously variable flow volume according to claim 9, **characterised in that** slid on the outer rotor (7) is the central body (18); or the central body (18) and the side sealing (11) and the side sealing (12) arranged from sides.

11. A gear pump with continuously variable flow volume according to claims 9 and 10, **characterised in that** it is provided with at least one shifting mechanism.

12. A gear pump with continuously variable flow volume according to claims 9 to 11, **characterised in that** the shifting mechanism and/or movable parts in axial direction are provided with at least one locking mechanism.

13. A gear pump with continuously variable flow volume according to claims 9 to 12, **characterised in that** it contains at least one rotational compensation system for compensation of closed volume or of closed gaps between teeth and it only applies if the rotors (7) and (8) are rotating around their axes X and Y.

14. A gear pump with continuously variable flow volume according to claims 9 to 13, for use in accumulation system.

15. A gear pump with continuously variable flow volume according to claims 9 to 14, **characterised in that** the rotors (7) and (8) of the gear pump (2) with continuously variable output flow may be driving as well as driven.

16. A transmission with continuously regulated output parameters, **characterised in that** it consists of a minimum of one gear pump (2) with continuously variable output flow according to claims 9 to 15 and at minimum one hydraulic motor; or a minimum one hydraulic gear motor (3) with continuously variable rotational speed according to claims 1 to 8 and at minimum one pump; or at minimum one gear pump (2) with continuously variable output flow according to claims 9 to 15 and at minimum one hydraulic gear motor (3) with continuously variable rotational speed according to claims 1 to 8, and where an output of the pump or of the gear pump (2) with continuously variable flow volume is connected with an inlet of the hydraulic motor or of the hydraulic gear motor (3) with continuously variable rotational speed and an outlet of the hydraulic motor or of the hydraulic gear motor (3) with continuously variable rotational speed is connected with the inlet of the pump or of the gear pump (2) with continuously variable flow volume.

17. A transmission with continuously regulated output parameters according to claim 16, **characterised in that** it contains at least one automatic evaluation and control system.

18. A hydraulic gear motor with continuously variable rotational speed according to claims 3 to 8 for use as a hydraulic or continuously regulated hydraulic brake.

## Patentansprüche

1. Hydraulischer Getriebemotor mit stufenlos verstellbarer Umdrehzahl, bestehend aus einer Welle (5) mit der Rotationachse X, an der mindestens ein Innenläufer (8) mit einer Außenverzahnung gelagert ist, der in mindestens einen Außenläufer (7) mit einer Innenverzahnung und mit der Rotationachse Y einführbar ist, wobei die Zähnezahl des Außenläufers (7) mit einer Innenverzahnung um eins größer ist als die Zähnezahl des Innenläufers (8) mit einer Außenverzahnung, und beinhaltend eine Eintrittsöffnung (21) und eine Austrittsöffnung (22), und wobei der Innenläufer (8) mit einer Außenverzahnung und der Außenläufer (7) mit einer Innenverzahnung mindestens einen Freiheitsgrad in axialer Richtung aufweisen **dadurch gekennzeichnet, dass** der Innenläufer (8) mit einer Außenverzahnung und der Außenläufer (7) mit einer Innenverzahnung seitlich mit einer Schiebedichtung (9) mit einer Verschiebegewinde und mit einer Schiebedichtung (10) mit Ausgleichszylindern der verschiedenen Durchmesser ausgestattet sind, wobei die Schiebedichtung (9) mit einer Verschiebegewinde einen dem Innendurchmesser von Zahnspitzen des Außenläufers (7) mit einer Innenverzahnung entsprechenden Durchmesser aufweist und die Schiebedichtung (10) mit Ausgleichszylindern einen dem Außendurchmesser von Zahnspitzen des Innenläufers (8) mit einer Außenverzahnung entsprechenden Durchmesser aufweist; wobei er mindestens ein flächiges Kompensationssystem zum Kompensieren von inneren Volumenänderungen umfasst, die bei der gegenseitigen axialen Bewegung der Läufer (7) und (8) aufgrund der unterschiedlichen Durchmesser von Schiebedichtungen (9) und (10) entstehen.

2. Hydraulischer Getriebemotor mit stufenlos verstellbarer Umdrehzahl nach Anspruch 1, **dadurch gekennzeichnet, dass** er eine Ausgangswelle (6) umfasst, die gleiche oder proportionale Umdrehzahl wie die Welle (5) aufweist.

3. Hydraulischer Getriebemotor mit stufenlos verstellbarer Umdrehzahl nach Anspruch 1 oder 2, **dadurch gekennzeichnet, dass** er ein reguliertes Nebenstromsystem umfasst.

4. Hydraulischer Getriebemotor mit stufenlos verstellbarer Umdrehzahl nach Anspruch 1 bis 3, **dadurch gekennzeichnet, dass** an den Außenläufer (7) ein Mittelkörper (18) aufgeschoben ist; oder der Mittelkörper (18) aufgeschoben ist und die Seitendichtung (11) und die Seitendichtung (12) von den Seiten angeordnet sind.

5. Hydraulischer Getriebemotor mit stufenlos verstellbarer Umdrehzahl nach Anspruch 1 bis 4, **dadurch gekennzeichnet, dass** er mit mindestens einem Schaltmechanismus ausgestattet ist.

6. Hydraulischer Getriebemotor mit stufenlos verstellbarer Umdrehzahl nach Anspruch 1 bis 5, **dadurch gekennzeichnet, dass** der Schaltmechanismus und/oder die beweglichen Bauteile in der axialen Richtung mit mindestens einem Verriegelungsmechanismus ausgestattet sind.

7. Hydraulischer Getriebemotor mit stufenlos verstellbarer Umdrehzahl nach Anspruch 1 bis 6, **dadurch gekennzeichnet, dass** er mindestens ein Kompensationsrotationsystem zum Kompensieren vom geschlossenen Volumen oder von geschlossenen Zwischenzahnräumen umfasst und nur dann wirksam ist, wenn sich die Läufer (7) und (8) um ihre Achsen X und Y drehen.

8. Hydraulischer Getriebemotor mit stufenlos verstellbarer Umdrehzahl nach Anspruch 1 bis 7, zur Anwendung im Speichersystem.

9. Zahnradpumpe mit stufenlos verstellbarem Ausgangsdurchfluss, umfassend eine Welle (4) mit der Rotationachse X, an der mindestens ein Innenläufer (8) mit einer Außenverzahnung gelagert ist, der in mindestens einen Außenläufer (7) mit einer Innenverzahnung mit der Rotationachse Y einführbar ist, wobei die Zähnezahl des Außenläufers (7) mit einer Innenverzahnung um eins größer ist als die Zähnezahl des Innenläufers (8) mit einer Außenverzahnung und beinhaltend eine Eintrittsöffnung (21) und eine Austrittsöffnung (22), **dadurch gekennzeichnet, dass** der Innenläufer (8) mit einer Außenverzahnung und der Außenläufer (7) mit einer Innenverzahnung mindestens einen Freiheitsgrad in axialer Richtung aufweisen, seitlich mit einer Schiebedichtung (9) mit einer Verschiebegewinde und mit einer Schiebedichtung (10) mit Ausgleichszylindern mit verschiedenen Durchmessern ausgestattet sind, wobei die Schiebedichtung (9) mit einer Verschiebegewinde einen dem Innendurchmesser von Zahnspitzen des Außenläufers (7) mit einer Innenverzahnung entsprechenden Durchmesser aufweist und die Schiebedichtung (10) mit Ausgleichszylindern einen dem Außendurchmesser von Zahnspitzen des Innenläufers (8) mit einer Außenverzahnung entsprechenden Durchmesser aufweist; und wobei sie mindestens ein flächiges Kompensationssystem zum Kompensieren von inneren Volumenänderungen, die bei der gegenseitigen axialen Bewegung der Läufer (7) und (8) aufgrund der unterschiedlichen Durchmesser von Schiebedichtungen (9) und (10) entstehen, und ein reguliertes Nebenstromsystem oder Synchronisierungssystem für die Läufer (7) und (8) umfasst.

10. Zahnradpumpe mit stufenlos verstellbarem Durchfluss nach Anspruch 9, **dadurch gekennzeichnet, dass** an den Außenläufer (7) ein Mittelkörper (18) aufgeschoben ist; oder der Mittelkörper (18) aufgeschoben ist und die Seitendichtung (11) und die Seitendichtung (12) von den Seiten angeordnet sind.

11. Zahnradpumpe mit stufenlos verstellbarem Durchfluss nach Anspruch 9 und 10, **dadurch gekennzeichnet, dass** sie mit mindestens einem Schaltmechanismus ausgestattet ist.

12. Zahnradpumpe mit stufenlos verstellbarem Durchfluss nach Anspruch 9 bis 11, **dadurch gekennzeichnet, dass** der Schaltmechanismus und/oder die beweglichen Bauteile in der axialen Richtung mit mindestens einem Verriegelungsmechanismus ausgestattet sind.

13. Zahnradpumpe mit stufenlos verstellbarem Durchfluss nach Anspruch 9 bis 12, **dadurch gekennzeichnet, dass** sie mindestens ein Kompensationsrotationsystem zum Kompensieren vom geschlossenen Volumen oder von geschlossenen Zwischenzahnräumen umfasst und nur dann wirksam ist, wenn sich die Läufer (7) und (8) um ihre Achsen X und Y drehen.

14. Zahnradpumpe mit stufenlos verstellbarem Durchfluss nach Ansprüchen 9 bis 13, zur Anwendung im Speichersystem.

15. Zahnradpumpe mit stufenlos verstellbarem Durchfluss nach Anspruch 9 bis 14, **dadurch gekennzeichnet, dass** die Läufer (7) und (8) der Zahnradpumpe (2) mit stufenlos verstellbarem Ausgangsdurchfluss antreibende sowie angetriebene sein können.

16. Getriebe mit stufenlos regulierbaren Ausgangsparemetern, **dadurch gekennzeichnet, dass** sie aus wenigstens einer Zahnradpumpe (2) mit stufenlos verstellbarem Ausgangsdurchfluss nach Anspruch 9 bis 15 und wenigstens einem hydraulischen Getriebemotor; oder aus wenigstens einem hydraulischen Motor (3) mit stufenlos verstellbarer Umdrehzahl nach Ansprüchen 1 bis 8 und wenigstens einer Pumpe; oder aus wenigstens einer Zahnradpumpe (2) mit stufenlos verstellbarem Ausgangsdurchfluss nach Anspruch 9 bis 15 und wenigstens einer Zahnradpumpe (3) mit stufenlos verstellbarer Umdrehzahl nach Ansprüchen 1 bis 8 besteht, und der Pumpenauslauf oder der Auslauf der Zahnradpumpe (2) mit stufenlos verstellbarem Durchfluss mit dem Einlauf des hydraulischen Motors oder mit dem Einlauf des hydraulischen Getriebemotors (3) mit stufenlos verstellbarer Umdrehzahl verbunden ist und der Auslauf des hydraulischen Motors oder der Auslauf des hydraulischen Getriebemotors (3) mit stufenlos verstellbarer Umdrehzahl mit dem Pumpeneinlauf oder mit dem Einlauf der Zahnradpumpe (2) mit stufenlos verstellbarem Durchfluss verbunden ist.

17. Getriebe mit stufenlos regulierbaren Ausgangsparemetern nach Anspruch 16, **dadurch gekennzeichnet, dass** sie mindestens einen automatischen Auswertungs- und Steuersystem umfasst.

18. Hydraulischer Getriebemotor mit stufenlos verstellbarer Umdrehzahl nach Anspruch 3 bis 8 zur Anwendung als hydraulische oder stufenlos regulierte Hydraulikbremse.

## Revendications

1. Moteur hydraulique à engrenages dont les tours sont réglables en continu, comportant un arbre (5) avec un axe de rotation X, sur lequel au moins un rotor intérieur (8) à denture extérieur est monté, qui est engrenant avec au moins un rotor extérieur (7) à denture intérieur avec un axe de rotation Y, la différence du nombre de dents du rotor extérieur (7) à denture intérieur et du rotor intérieur (8) à denture extérieur étant égal à un; et comportant une ouverture d'entrée (21) et une ouverture de sortie (22); et où le rotor intérieur (8) à denture extérieur et le rotor extérieur (7) à denture intérieur ont au moins un degré de liberté dans la direction axiale, **caractérisé en ce que** le rotor intérieur (8) à denture extérieur et le rotor extérieur (7) à denture intérieur sont équipés de côté et d'autre d'un joint d'étanchéité glissant (9) avec un filet déplaceable et d'un joint glissant (10) avec des cylindres de compensation, de diamètres inégals, le diamètre du joint d'étanchéité (9) glissant avec le filet déplaceable correspondant avec le diamètre intérieur des sommets des dents du rotor extérieur (7) à denture intérieur, et le diamètre du joint glissant (10) avec des cylindres de compensation correspondant avec le diamètre extérieur des sommets des dents du rotor intérieur (8) à denture extérieur; comportant au moins un système superficiel de compensation afin de compenser des changements volumétriques intérieurs, qui se déclarent au cours du mouvement mutuel axial des rotors (7) et (8) conséquemment aux diamètres inégals des joints d'étanchéité glissants (9) et (10).

2. Moteur hydraulique à engrenages dont les tours sont réglables en continu, selon la révendication 1, **caractérisé en ce qu'** il comporte un arbre de sortie (6), dont les tours sont égal ou proportionnel aux tours de l'arbre (5).

3. Moteur hydraulique à engrenages dont les tours sont réglables en continu, selon la révendication 1 ou 2, **caractérisé en ce qu'** il comporte un système d'écoulement réglé.

4. Moteur hydraulique à engrenages dont les tours sont réglables en continu, selon l'une des revendications 1 à 3, **caractérisé en ce qu**'un corps central (18) est monté sur le rotor extérieur (7) ou un corps central (18) est monté et les joints d'étanchéité latérals (11) et (12) sont arrangés de côté et d'autre.

5. Moteur hydraulique à engrenages dont les tours sont réglables en continu, selon l'une des revendications 1 à 4, **caractérisé en ce qu'**il est équipé au moins d'un mécanisme de déplacement.

6. Moteur hydraulique à engrenages dont les tours sont réglables en continu, selon l'une des revendications 1 à 5, **caractérisé en ce que** le mécanisme de déplacement et/ou les pièces mobiles dans la direction axiale sont équipés au moins d'un arrêt.

7. Moteur hydraulique à engrenages dont les tours sont réglables en continu, selon l'une des revendications 1 à 6, **caractérisé en ce qu'**il comporte au moins un système de compensation rotatif, afin de compenser le volume clos ou l'espace clos entre les dents et il n'est appliqué que dans le cas où les rotors (7) et (8) tournent autour leurs axes X et Y.

8. Moteur hydraulique à engrenages dont les tours sont réglables en continu, selon l'une des revendications 1 à 7, pour l'application dans un système d'accumulation.

9. Pompe à engrenages dont le débit de sortie est réglable en continu, comportant un arbre (4) avec un axe de rotation X, sur lequel au moins un rotor intérieur (8) à denture extérieur est monté, qui est engrenant avec un rotor extérieur (7) à denture intérieur avec un axe de rotation Y, la différence du nombre de dents du rotor extérieur (7) à denture intérieur et du rotor intérieur (8) à denture extérieur étant égal à un; et comportant une ouverture d'entrée (21) et une ouverture de sortie (22), **caractérisée en ce que** le rotor intérieur (8) à denture extérieur et le rotor extérieur (7) à denture intérieur ont au moins un degré de liberté dans la direction axiale, ils sont équipés de côté et d'autre d'un joint d'étanchéité glissant (9) avec un filet déplaceable et d'un joint glissant (10) avec des cylindres de compensation, de diamètres inégals, le diamètre du joint d'étanchéité glissant (9) avec le filet déplaceable correspondant au diamètre intérieur des sommets des dents du rotor extérieur (7) à denture intérieur, et le diamètre du joint glissant (10) avec des cylindres de compensation correspondant au diamètre extérieur des sommets des dents du rotor intérieur (8) à denture extérieur; et comportant au moins un système superficiel de compensation afin de compenser des changements volumétriques intérieurs qui se déclarent au cours du mouvement mutuel axial des rotors (7) et (8) conséquemment à l'inégalité des diamètres des joints d'étanchéité glissants (9) et (10), et comportant un système d'écoulement réglé ou un système de synchronisation des rotors (7) et (8).

10. Pompe à engrenages dont le débit est réglable en continu, selon la révendication 9, **caractérisée en ce qu**'un corps central (18) est monté sur le rotor extérieur (7) ou un corps central (18) est monté et les joints d'étanchéité latérals (11) et (12) sont arrangés de côté et d'autre.

11. Pompe à engrenages dont le débit est réglable en continu, selon les révendications 9 et 10, **caractérisée en ce qu'**elle est équipée au moins d'un mécanisme de déplacement.

12. Pompe à engrenages dont le débit est réglable en continu, selon l'une des révendications 9 à 11, **caractérisée en ce que** le mécanisme de déplacement et/ou les pièces mobiles dans la direction axiale sont équipés au moins d'un arrêt.

13. Pompe à engrenages dont le débit est réglable en continu, selon l'une des révendications 9 à 12, **caractérisée en ce qu**'elle comporte au moins un système de compensation a rotatif afin de compenser le volume clos ou l'espace clos entre les dents et il n'est appliqué que dans le cas où les rotors (7) et (8) tournent autour leurs axes X et Y.

14. Pompe à engrenages dont le débit est réglable en continu, selon l'une des révendications 9 à 13, pour l'application dans un système d'accumulation.

15. Pompe à engrenages dont le débit est réglable en continu, selon l'une des révendications 9 à 14, **caractérisée en ce que** les rotors (7) et (8) de la pompe à engrenages (2), dont le débit de sortie est réglable en continu, peuvent être les rotors de commande aussi bien que les rotors commandés.

16. Boîte de vitesse dont les paramètres de sortie sont réglables en continu **caractérisée en ce qu**'elle comporte au moins une pompe à engrenages (2), dont le débit de sortie est réglable en continu selon l'une des révendications 9 à 15, et au moins un moteur hydraulique à engrenages (3), dont les tours sont réglables en continu selon l'une des révendications 1 à 8, et au moins une pompe; ou au moins une pompe à engrenages (2), dont le débit de sortie est réglable en continu selon l'une des révendications 9 à 15 et au moins un moteur hydraulique à engrenages (3) dont les tours sont réglables en continu selon l'une des revendications 1 à 8, et où la sortie de la pompe ou de la pompe à engrenages (2), dont le débit est réglable en continu, est raccordée à l'entrée du moteur hydraulique ou à l'entrée du moteur hydraulique à engrenages (3) dont les tours sont réglables en continu et la sortie du moteur hydraulique ou du moteur hydraulique à engrenages (3), dont les tours sont réglables en continu, est raccordée à l'entrée de la pompe ou de la pompe à engrenages (2), dont le débit est réglable en continu.

17. Boîte de vitesse dont les paramètres de sortie sont réglables en continu, selon la révendication 16, **caractérisée en ce qu**'elle comporte au moins un système automatique de sélection et de commande.

18. Moteur hydraulique à engrenages dont les tours sont réglables en continu, selon l'une des revendications 3 à 8, pour l'application comme un frein hydraulique ou un frein hydraulique réglable en continu.
